# EUROPEAN PATENT APPLICATION

(11) **EP 3 640 788 A1**
(43) Date of publication of application: **22.04.2020**
(21) Application number: 18818559.9
(22) Date of filing: 22.05.2018
(51) Int. Cl.: G06F 3/0488

(54) **CONVENIENT OPERATING METHOD AND TERMINAL**

(30) Priority: 14.06.2017 CN 201710449024
(71) Applicant: ZTE Corporation, Shenzhen, Guangdong 518057 (CN)
(72) Inventor: CHEN, Qingwei, Shenzhen Guangdong 518057 (CN)
(74) Representative: Hervouet-Malbec, Sylvie
(86) International application number: PCT/CN2018/087829
(87) International publication number: WO 2018/228146

(57) **Abstract**

Disclosed are a convenient operating method and a convenient operating terminal. The method includes: acquiring a touch trajectory inputted by a user on a touch screen; acquiring from a preset first database a pattern or character matching the touch trajectory; matching the acquired pattern or character with operating object-associated information in a preset information database, the operating object-associated information being relevant information of a corresponding operating object; and displaying, under the condition of successful matching, the operating object corresponding to the operating object-associated information successfully matched.

## Description

### FIELD OF THE INVENTION

The present disclosure relates to the field of communication technologies, and in particular to a convenient operating method and terminal.

### BACKGROUND

Currently, there are various solutions for rapid starting of applications, e.g., classifying and storing applications into different folders so that a user can conveniently find and start the applications; or performing application search through an application search engine, and rapidly starting the found application. For a convenient searching method for web page contents, a search may be performed by screen word-capturing, or by inputting keywords into a search engine, and the like. For local files, a search may be performed only after entering an application interface or a search interface. Further, the above operation purpose may also be achieved by a voice search function.

However, the solutions in the prior art all require the user to unlock the terminal first. After the touch screen is lightened and unlocked, folders for storing classified applications are then opened, and a corresponding application icon is clicked; or an application search engine is opened, an application name is input, for example. If it is desired to enter other applications or open some files during the use of a particular application, it is required to quit the current application. For the users, these solutions in the prior art all require multiple steps of operations to achieve the final operation purpose, thereby wasting the operation time of the user, and resulting in poor user experience. Further, the voice search function is limited by the application scenarios, and cannot achieve 100% accuracy in voice recognition of the user. Therefore, it is urgent to reduce the operating steps and improve operating efficiency of the user.

### SUMMARY

In an embodiment of the present disclosure, there is provided a convenient operating method, including: acquiring a touch trajectory inputted by a user on a touch screen; acquiring from a preset first database a pattern or character matching the touch trajectory; matching the acquired pattern or character with operating object-associated information in a preset information database, the operating object-associated information being relevant information of a corresponding operating object; and displaying, under the condition of successful matching, the operating object corresponding to the operating object-associated information successfully matched.

In an embodiment of the present disclosure, there is further provided a convenient operating terminal, including: a first acquiring module configured to acquire a touch trajectory inputted by a user on a touch screen; a second acquiring module configured to acquire from a preset first database a pattern or character matching the touch trajectory; a matching module configured to match the acquired pattern or character with the operating object-associated information in the preset information database; the operating object-associated information being relevant information of a corresponding operating object; and a display module configured to display the operating object corresponding to the operating object-associated information successfully matched under the condition that the matching module matches successfully.

In an embodiment of the present disclosure, there is further provided a storage medium having one or more programs stored thereon which, when executed by a processor, causes the processor to implement the convenient operating method as described above.

### BRIEF DESCRIPTION OF THE DRAWINGS

Fig. 1 is a flowchart of a convenient operating method according to a first embodiment of the present disclosure;
Fig. 2 is a flowchart of another convenient operating method according to the first embodiment of the present disclosure;
Fig. 3 is a schematic diagram illustrating displaying the operating object corresponding to the operating object-associated information successfully matched in the first embodiment of the present disclosure; and
Fig. 4 is a schematic diagram of modules in a convenient operating terminal according to a second embodiment of the present disclosure.

### DETAILED DESCRIPTION OF THE EMBODIMENTS

The present disclosure will be described in further detail with reference to the following detailed description and accompanying drawings.

### First Embodiment:

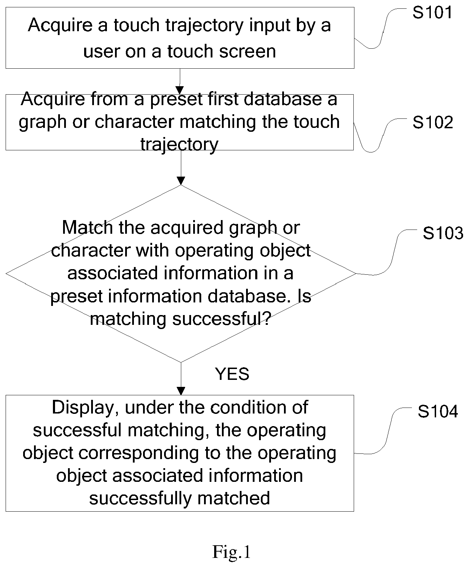

Referring to Fig. 1, this embodiment shows a convenient operating method which can acquire a touch trajectory input by a user on a touch screen when the user inputs the touch trajectory on the touch screen; then determine a pattern or character matching the acquired touch trajectory; match the pattern or character with operating object-associated information in a preset information database; and display the operating object corresponding to the operating object-associated information successfully matched. In this embodiment, the process from the acquiring of the touch trajectory to the displaying of the operating object is automatically completed by a terminal, and for the user, only one action, i.e., inputting the touch trajectory, is performed. After the displaying of the operating object, the user may perform an operation by only clicking the desired operating object. For the user, the operating steps corresponding to the open operation are greatly simplified, the operating efficiency is improved, and the user experience is naturally improved.

As shown in Fig. 1, the convenient operating method disclosed in this embodiment includes steps S101 to S104.

At S101, acquiring a touch trajectory inputted by a user on a touch screen.

At S102, acquiring from a preset first database a pattern or character matching the touch trajectory.

At S103, matching the acquired pattern or character with operating object-associated information in a preset information database, the operating object-associated information being relevant information of a corresponding operating object.

At S104, displaying, under the condition of successful matching, the operating object corresponding to the operating object-associated information successfully matched.

In this embodiment, the terminal implementing the above method flow includes, but is not limited to, a mobile terminal, such as a mobile phone, a tablet, and the like.

In step S101, the step of acquiring the touch trajectory inputted by the user on the touch screen is implemented when the user inputs the touch trajectory on the touch screen. However, when the user inputs the touch trajectory on the touch screen, the touch trajectory may be input on a system standby interface of the terminal, or input on other operation interfaces, which is not limited herein. The touch screen may be a touch screen of a terminal for implementing the above method flow. In step S104, the operating object corresponding to the operating object-associated information successfully matched may be displayed on the touch screen.

The method for acquiring the touch trajectory input by the user on the touch screen may include: collecting, when a user draws a touch trajectory on the touch screen, a corresponding touch trajectory on the touch screen (i.e., collecting effective touch points touched by the user on the touch screen), acquiring index values of the effective touch points on the touch trajectory, storing the index values, performing trajectory calculation according to the index values, and restoring the input trajectory of the user in the terminal system. The index value refers to corresponding coordinate values of each of the effective touch points on the touch screen.

Further, the information stored in the first database in this embodiment includes patterns or characters, or both. The characters in this embodiment include, but are not limited to, letters, Chinese characters, and numbers.

In one embodiment, the patterns and characters may be stored in the same database. In another embodiment, the first database includes a handwriting template database and a unigram database for storing characters, and a pattern database for storing patterns. The handwriting template database and the unigram database may use existing handwriting template databases and unigram databases in the system, while the pattern database may be a database newly set in the terminal system. Further, the pattern database includes some ordinary patterns like heart, circle, square, triangle, etc.

In step S102, a pattern or character matching the touch trajectory is acquired from a preset first database. The matching here may refer to that the touch trajectory is matched with the pattern or character in shape. For example, when the touch trajectory has a "W" shape, the character "W" is matched in the first database; and when the touch trajectory is a heart-shaped graph, a heart-shaped pattern is matched in the first database.

When the pattern or character matching the touch trajectory is acquired from the first database, if patterns and characters are separately stored, for example, patterns are stored in a dedicated pattern database, while characters are stored in a handwriting template database and a unigram database, the touch trajectory may be firstly matched with the characters in the handwriting template database and the unigram database, and then matched in the pattern database if the matching with characters is not successful; or the touch trajectory may be firstly matched with the patterns in the pattern database, and then matched in the handwriting template database and the unigram database if the matching with patterns is not successful. If characters are stored in a handwriting template database or a unigram database, the process of acquiring the character in step S102 may include: traversing the handwriting template database or the unigram database to find a character matching the touch trajectory.

The operating object-associated information in this embodiment is relevant information of a corresponding operating object; and the operating object-associated information has correspondence relationship with the operating objects. The operating object includes, but is not limited to, an application, a folder, a contact, a web search, and the like. The operating object-associated information includes, but is not limited to, an application name (corresponding to the operating object "application"), an application icon (corresponding to the operating object "application"), a folder name (corresponding to the operating object "folder"), contact information (such as a contact name) (corresponding to the operating object "contact"), search keywords input in a web search (corresponding to the operating object "web search"), and the like.

In this embodiment, it may be envisaged that after the acquired character or pattern matching the touch trajectory is successfully matched with the operating object associated information in the preset information database, the displayed associated object may be one or more of an application, a folder, a contact, and a web search. Regarding the display of the operating object, it may be displayed to the user in a text form or in a UI image form. Generally, if the operating object matched in step S103 includes an application, the operating object is displayed to the user in the form of an application icon, and if the operating object matched in step S103 includes a contact, the corresponding contact (generally at least the name of the contact) is displayed to the user. It will be appreciated that the corresponding application interface or the contact interface is entered if the user clicks the displayed operating object, for example, clicks the application icon or the contact. It will be appreciated that one touch trajectory of a user may match multiple applications, multiple contacts, multiple folders, multiple web searches, and so on.

For the matching process in step S103, a preset information database for storing operating object associated information is provided in the terminal. The operating object associated information of the operating object appearing on the terminal during the use of the terminal by the user may be stored in the preset information database. In order to facilitate the matching between the graphs and the operating object associated information in step S103, correspondence relationship between the corresponding graph and operating object associated information may be preset in the preset information database. When a graph is matched in step S102, the corresponding operating object associated information may be matched in the preset information database according to the shape of the graph. Considering that a complicated graph has higher requirements on the drawing time and drawing capability of the user, and will increase difficulties in matching the graph in step S103, some simple graphs, e.g., circle, heart, square, or the like, may be used for setting the correspondence relationship with the operating object associated information in the preset information database. It may be envisaged that the correspondence relationship between the graphs and the operating object associated information may be set by the user, or may be set automatically by the terminal but known to the user.

When the touch trajectory acquired in step S102 is matched with a graph, step S103 (matching the acquired graph or character with operating object associated information in a preset information database) includes:
acquiring correspondence relationship between graphs and the operating object associated information prestored in the preset information database, and matching graphs corresponding to respective pieces of operating object associated information in the correspondence relationship with the acquired graph matching the touch trajectory.

This scheme requires preset correspondence relationship between the graphs and the operating object associated information, and thus has certain limitations because the correspondence relationship between the graphs and the operating object associated information needs to be reset when an operating object is newly added.

Considering that many current application icons have symbolic patterns, e.g., an icon of "music application" in the system is a musical note, an icon of "mobile phone manager" is a shield, and an icon of "sports service" has a heart shape, and so on, in one embodiment, a matched application icon may be obtained by matching a graph matching the touch trajectory with the application icons, so as to finally display the application.

In one embodiment, when the touch trajectory acquired in step S102 is matched with a graph, step S103 includes: acquiring operating object associated information in the preset information database, matching the graph matching the touch trajectory with an application icon in the operating object associated information, and determining that the matching is successful if the similarity of the two exceeds a preset first threshold, or the graph matching the touch trajectory appears in the application icon.

For example, if the touch trajectory input by the user has a heart shape, a contact "Li XX" in the preset information database corresponding to a graph of a heart shape, and further an application icon (assumed to be an icon of "exercise health") has a heart shape, then the finally matched operating object associated information includes the contact "Li XX" and the application icon of "exercise health". As a result, the operating objects displayed in step S104 include the contact "Li XX" and the application "exercise health" (which may display in the form of an application icon).

In one embodiment, correspondence relationship between characters and the operating object associated information may be stored in the preset information database, where the characters used in the correspondence relationship may be characters irrelevant to the operating object associated information, or may be characters relevant to the operating object associated information, such as English letters, Chinese characters, pinyin letters of Chinese characters, and the like included in the operating object associated information. The characters include, but are not limited to, numbers, Chinese characters, letters, and other information.

In one embodiment, when the touch trajectory acquired in step S102 is matched with a character, step S103 includes: acquiring correspondence relationship between characters and the operating object associated information prestored in the preset information database, and matching characters corresponding to respective pieces of operating object associated information in the correspondence relationship with the acquired character matching the touch trajectory. When the character matching the touch trajectory appears in the operating object associated information, the matching may be considered to be successful. For example, the user inputs the character " 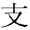 ("pay")", and in the preset information database, the application Ali-pay is set to correspond to the characters " 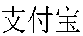 (Ali-pay)". Therefore, the character matching the touch trajectory is present in the operating object-associated information, and the matching is successful.

As can be known from the above description, most of the operating object-associated information in the preset information database is text information, which means that most of the operating object-associated information can be matched by directly using characters.

In one embodiment, when the touch trajectory acquired in step S102 is matched with a character, step S103 includes: directly matching the acquired character matching the touch trajectory with each piece of operating object-associated information in the preset information database. In this scheme, the correspondence relationship between the operating object-associated information and the patterns or characters does not need to be preset in a preset information database, thereby convenient to use.

For directly matching the acquired character matching the touch trajectory with each piece of operating object-associated information, the acquired character may be matching Chinese characters or English letters in the operating object-associated information, or the acquired character may be matching pinyin of the Chinese characters (such as initial consonants of the pinyin) and the like. For example, if the user inputs the character "W", "W" is directly matched with each piece of operating object associated information, and if the pinyin of a Chinese character, e.g., "Weixin (WeChat)", in the operating object-associated information includes "W", the operating object-associated information "WeChat" is considered to be successfully matched. The direct matching of the acquired character matching the touch trajectory with each piece of operating object-associated information may be implemented in a traversal manner. In addition, the character may be matching application icons in the operating object-associated information, and when there is a character (or pattern) in an application icon having a similarity exceeding a preset threshold of the character, it is determined that the matching is successful. If the user inputs the character "e", and an application icon of "Eleme" exists in the preset information database (corresponding to the application "Eleme") and has a pattern similar to the character "e", it is determined that the icon of "Eleme" is the operating object-associated information matching the character "e".

Further, it may be envisaged that new operating objects may occur due to new applications, new web search keywords, and the like during the use of the terminal by the user, and in order to match as much operating object-associated information as possible during the matching process in step S103, the real-time performance of the operating object-associated information in the preset information database needs to be maintained. Therefore, the convenient operating method in this embodiment may further include: judging whether the newly appeared operating object-associated information is stored in the preset information database during the use of the terminal by the user; and updating the preset information database with the newly appeared operating object-associated information when the determining result is negative (i.e., the newly appeared operating object-associated information is not stored in the preset information database). The updating process includes, but is not limited to, writing the new operating object-associated information into the preset information database.

If a correspondence relationship between the operating object-associated information and the characters or patterns is set in the preset information database, after the operating object-associated information is newly added, a corresponding pattern or character to the newly added operating object-associated information may be set. In one embodiment, the correspondence relationship between the operating object-associated information and the characters or patterns may also be stored in a storage space other than the preset information database.

When the acquired pattern or character is matched with the operating object-associated information in the preset information database in step S103, the matching is generally performed from the first piece to the last piece of operating object-associated information in the preset information database. Therefore, an order of arrangement of the operating object-associated information in the preset information database has some influence on the time required for completing the matching of step S103. The operating object-associated information of an operating object which is frequently used by the user is ranked at the top to facilitate quick matching. In one embodiment, the convenient operating method further includes: counting usage habits of the user regarding an operating object corresponding to the operating object-associated information; the usage habits including at least one of a group consisting of usage time, number of uses, and usage frequency; determining a usage possibility of the operating object by the user according to the using habits, and sequencing the operating object-associated information in the preset information database according to the usage possibility. Generally, if the user uses an operating object for a longer time, with a higher frequency of use and with a larger number of uses, this means that the user has a higher possibility of using the operating object, and the operating object-associated information of the operating object is ranked at the top in the preset information database.

In practical use of the convenient operating method of this embodiment, if a user inputs a touch trajectory on a standby interface or a display interface of some applications, a false touch of an icon on the standby interface or a false touch of content on the display interface of the applications may possibly occur. If a touch trajectory is input on the interface of the APP "Baidu", a link on the display interface of the APP "Baidu" is likely to be triggered, resulting in a false touch. In order to avoid such false touches, in one embodiment, an operation interface may be specifically displayed before the user inputs the touch trajectory, so as to avoid false touches.

Accordingly, in this embodiment, a shortcut button including a first sub-button is arranged on an operation interface of the terminal; and before step S101 (acquiring a touch trajectory input by a user on a touch screen), the convenient operating method further includes: calling a preset operation interface when the user triggers the first sub-button. Step S101 includes: acquiring a touch trajectory input by the user on the preset operation interface; and step S104 (displaying the operating object corresponding to the operating object-associated information successfully matched) includes: displaying the operating object corresponding to the operating object-associated information successfully matched on the preset operation interface. The shortcut button includes, but is not limited to, a floatable button. The shortcut button may be suspended on any operation interface, such as a standby interface or an application operation interface.

In order to reduce false touches, in one embodiment, in step S101, a pressure value of the touch trajectory on the touch screen is further acquired while acquiring the touch trajectory inputted by the user on the touch screen (for example, a pressure sensor in the terminal acquires a pressure applied on the touch screen when the user inputs the touch trajectory), and step S102 (acquiring from a preset first database a pattern or character matching the touch trajectory) is performed only when the pressure value satisfies a preset pressure condition; otherwise, step S102 is not performed (and obviously, subsequent steps S103, S104 are not performed). The preset pressure condition may be that the pressure value of the touch trajectory on the touch screen exceeds a preset pressure threshold.

In practice, while inputting a touch trajectory, the user may find that the input touch trajectory may have an error. At this time, the input operation of many users becomes hesitant, and contact time between a finger of the user and the touch screen becomes longer. Therefore, duration for the user to input the touch trajectory may also be used as a basis for judging whether the input by the user is wrong. In one embodiment, duration of the user inputting the touch trajectory on the touch screen is acquired while acquiring the touch trajectory inputted by the user on the touch screen. When the duration of the user inputting the touch trajectory exceeds a preset duration, step S102 (acquiring from a preset first database a pattern or character matching the touch trajectory) is not performed any more.

In one embodiment, the touch trajectory input by the user may contain a plurality of characters, and if step S102 is performed when the user inputs only one character, the operating object actually desired by the user may not be matched. For this reason, in one embodiment, in step S101, while acquiring the touch trajectory inputted by the user on the touch screen, if the user inputs one character, the first character input by the user, after being acquired, is stored without being matched with the operating object-associated information. After the user inputs other characters (a second character, or a second character and a third character, etc.) within a preset time, all the characters input by the user within the preset time are matched with the operating object-associated information in the preset information database as a whole. The preset time may be 5 seconds, 8 seconds, or the like.

At present, some terminals may be provided with a function of setting a quick start mode for some APPs, which includes starting the corresponding APP by inputting a preset touch trajectory, which undoubtedly may cause certain influence on the method of this embodiment. In order to avoid such influence, the method of this embodiment may further include collecting operation habits of the user on the terminal during use of the terminal, the operation habits including, when a touch trajectory is input, a shape of the touch trajectory and a corresponding operation purpose. After step S101 (acquiring a touch trajectory input by a user on a touch screen), the method further includes: pre-determining the corresponding operation purpose of the touch trajectory according to the shape of the touch trajectory and the user habits, and performing step S102 (acquiring from a preset first database a pattern or character matching the touch trajectory) only when the pre-determined operation purpose is to display the operating object corresponding to the operating object-associated information successfully matched.

When the user inputs the touch trajectory, the input touch trajectory may have an error, and in order to eliminate such errors, the embodiment may further include: canceling the previous touch trajectory input by the user and stopping step S102 (no longer performing step S102 if it is not started) under the condition that a preset cancel gesture input by the user on the touch screen is further acquired after step S101 (acquiring a touch trajectory input by a user on a touch screen). The preset cancel gesture includes, but is not limited to, two fingers sliding downward on the touch screen, and the like.

In order to cancel the erroneous trajectory input by the user, in one embodiment, a shortcut button including a second sub-button is arranged on an operation interface of the terminal; and after step S101 (acquiring a touch trajectory input by a user on a touch screen), if the user triggers the second sub-button, the previous touch trajectory input by the user is cancelled, and step S102 is stopped (step S102 is no longer performed if it is not started).

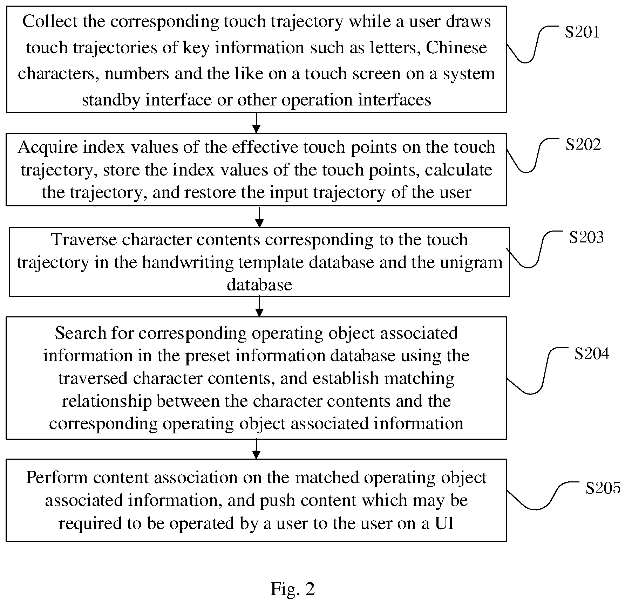

The convenient operating method of the present embodiment is described in detail with reference to Fig. 2. Provided that characters are stored in a handwriting template database and a unigram database, and the system is provided with a preset information database, the database will synchronize operating object-associated information such as file names, application names, contacts, search keywords and the like in real time while a user uses the terminal.

The method flow in Fig. 2 includes steps S201 to S205.

At S201, collecting the corresponding touch trajectory while a user draws touch trajectories of key information such as letters, Chinese characters, numbers and the like on a touch screen on a system standby interface or other operation interfaces. Here, the step of collecting the touch trajectory generally refers to collect valid touch points on the touch trajectory drawn by the user.

At S202, acquiring index values of the effective touch points on the touch trajectory, storing the index values of the touch points, calculating the trajectory, and restoring the input trajectory of the user. Here, restoring the input trajectory of the user may include: redrawing the trajectory according to the index values of the touch points.

At S203, traversing character contents corresponding to the touch trajectory in the handwriting template database and the unigram database.

At S204, searching for corresponding operating object-associated information in the preset information database using the traversed character contents, and establishing matching relationship between the character contents and the corresponding operating object-associated information.

At S205, performing content association on the matched operating object-associated information, i.e., associating the matched operating object-associated information with a specific operating object, and pushing content which may be required to be operated by a user to the user on a UI (user interface).

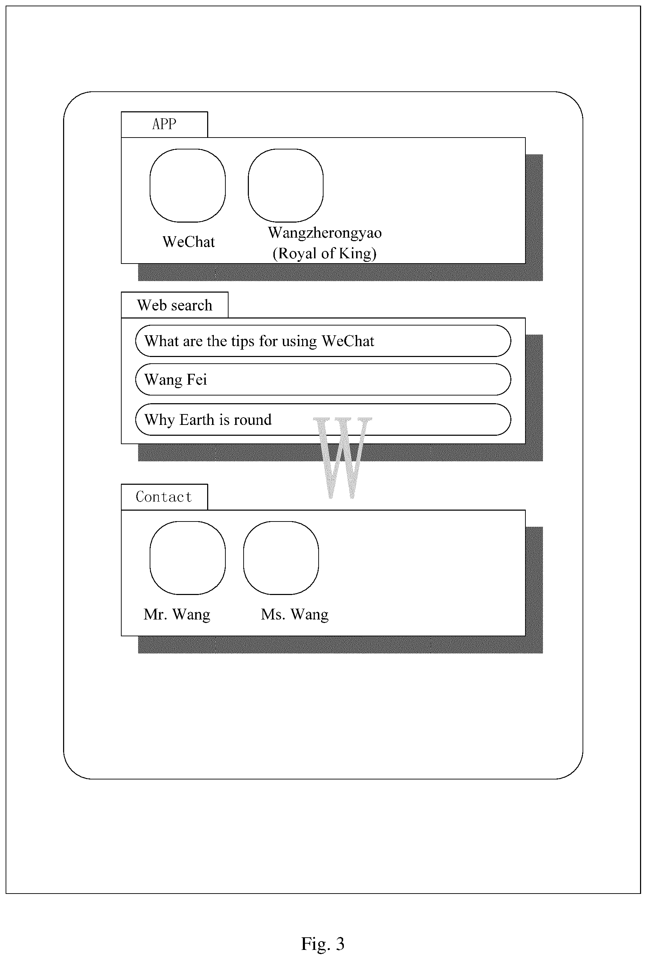

For example, when a user inputs "W" on a touch screen in a system standby interface, a touch system of the terminal will collect index values of all touch points on the touch trajectory of the user and transmit the index values to a master control system which, after receiving the index values, performs trajectory calculation and redrawing. The redrawn trajectory traverses the handwriting template database and the unigram database to find out the letter "W", and the letter "W" is matched with specific operating object-associated information in the preset information database. As shown in Fig. 3, the master control system matches "W" with operating object-associated information such as "Weixin (WeChat)", "Wangzherongyao (Royal of King)", "What are the Tips for Using WeChat", "Wang Fei (Faye Wang)", "Why Earth is round", "Mr. Wang", "Miss Wang", and the like, according to information such as a usual starting frequency of an application by the user, search content, contact number of a contact, and the like; and then associates the matched operating object-associated information with the corresponding specific operating object. In Fig. 3, the associated operating objects are classified into, but are not limited to, applications, web searches, contacts, local files, and the like. A user may select an operating object according to the content pushed by the master control system, which simplifies the operation flow steps of the user and improves the user experience.

By adopting the convenient operating method of the embodiment, the touch trajectory input by the user on the touch screen can be acquired; a pattern or a character matching the touch trajectory can be acquired from a preset first database; the acquired pattern or character can be matched with operating object-associated information in the preset information database, the operating object-associated information being relevant information of a corresponding operating object; and under the condition of successful matching, the operating object corresponding to the operating object-associated information successfully matched is displayed. By adopting the method of the embodiment, for the user, the operation involves only one step, i.e., inputting a touch trajectory, then the terminal can display a plurality of operating objects which are possibly required by the user currently, which reduces the steps of searching for the operating objects by the user, improves the operating efficiency of the user, saves time for the user and improves the user experience.

### Second Embodiment:

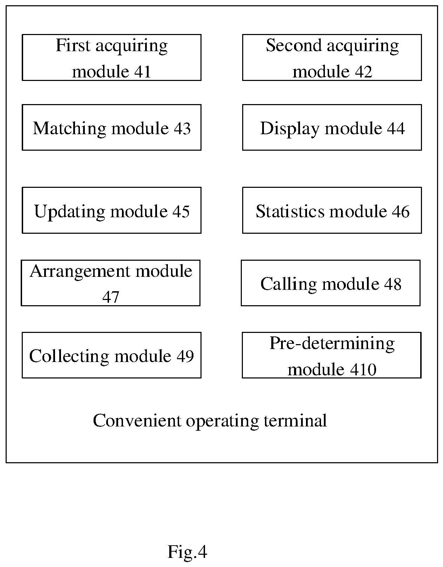

This embodiment shows a convenient operating terminal which, as shown in Fig. 4, includes a first acquiring module 41, a second acquiring module 42, a matching module 43, and a display module 44.

The first acquiring module 41 is configured to acquire a touch trajectory inputted by a user on a touch screen.

The second acquiring module 42 is configured to acquire from a preset first database a pattern or character matching the touch trajectory.

The matching module 43 is configured to match the acquired pattern or character with operating object-associated information in a preset information database, the operating object-associated information being relevant information of a corresponding operating object.

The display module 44 is configured to display the operating object corresponding to the operating object-associated information successfully matched under the condition that the matching module 43 matches successfully.

In this embodiment, the convenient operating terminal includes, but is not limited to, a mobile terminal, such as a mobile phone, a tablet, and the like.

The first acquiring module 41 acquires the touch trajectory inputted by the user on the touch screen when the user inputs the touch trajectory on the touch screen. However, when the user inputs the touch trajectory on the touch screen, the touch trajectory may be input on a system standby interface of the terminal, or input on other operation interfaces, which is not limited herein. In addition, the touch screen may be a touch screen of the convenient operating terminal, and may correspond to the display module 44.

The method for the first acquiring module 41 acquiring the touch trajectory input by the user on the touch screen may include: collecting, when a user draws a touch trajectory on the touch screen, a corresponding touch trajectory on the touch screen (i.e., collecting effective touch points touched by the user on the touch screen), acquiring index values of the effective touch points on the touch trajectory, storing the index values, performing trajectory calculation according to the index values, and restoring the input trajectory of the user in the terminal system. The index value refers to corresponding coordinate values of each of the effective touch points on the touch screen.

Further, the terminal of this embodiment may further include a storage module (not shown) for storing the first database and the preset information database. The storage module may be implemented by a storage medium such as a ROM, a RAM, an SD card, or the like in the terminal. The information stored in the first database in this embodiment includes patterns or characters, or both. The characters in this embodiment include, but are not limited to, letters, Chinese characters, and numbers.

In one embodiment, the patterns and characters may be stored in the same database. In another embodiment, the first database includes a handwriting template database and a unigram database storing characters, and a pattern database storing patterns. The handwriting template database and the unigram database may use existing handwriting template databases and unigram databases in the system, while the pattern database may be a database newly set in the terminal system. Further, the pattern database includes some ordinary patterns like heart, circle, square, triangle, etc.

The second acquiring module 42 acquires a pattern or character matching the touch trajectory from the preset first database. The matching here may refer to that the touch trajectory is matched with the pattern or character in shape. For example, when the touch trajectory has a "W" shape, the character "W" is matched in the first database; and when the touch trajectory is a heart-shaped graph, a heart-shaped pattern is matched in the first database.

When the second acquiring module 42 acquires the pattern or character matching the touch trajectory from the first database, if patterns and characters are separately stored, for example, patterns are stored in a dedicated pattern database, while characters are stored in a handwriting template database and a unigram database, the second acquiring module 42 may firstly match the touch trajectory with the characters in the handwriting template database and the unigram database, and then match in the pattern database if the matching with characters is not successful; or the second acquiring module 42 may firstly match the touch trajectory with the patterns in the pattern database, and then match in the handwriting template database and the unigram database if the matching with patterns is not successful. If characters are stored in a handwriting template database or a unigram database, the process of the second acquiring module 42 acquiring characters may include: traversing the handwriting template database or the unigram database to find a character matching the touch trajectory.

The operating object-associated information in this embodiment is relevant information of a corresponding operating object; and the operating object-associated information has correspondence relationship with the operating objects. The operating object includes, but is not limited to, an application, a folder, a contact, a web search, and the like. The operating object-associated information includes, but is not limited to, an application name (corresponding to the operating object "application"), an application icon (corresponding to the operating object "application"), a folder name (corresponding to the operating object "folder"), contact information (such as a "contact" name) (corresponding to the operating object "contact"), search keywords input in a web search (corresponding to the operating object "web search"), and the like.

In this embodiment, it may be envisaged that after the matching module 43 matches the acquired character or pattern matching the touch trajectory with the operating object associated information in the preset information database successfully, the associated object displayed by the display module 44 may be one or more of an application, a folder, a contact, and a web search. Regarding the display of the operating object, it may be displayed to the user in a text form or in a UI image form. Generally, if the operating object matched by the matching module 43 includes an application, the display module 44 displays the operating object to the user in the form of an application icon, and if the operating object matched by the matching module 43 includes a contact, the display module 44 displays the corresponding contact (generally at least the name of the contact) to the user. It will be appreciated that the corresponding application interface or the contact interface is entered if the user clicks the displayed operating object, for example, clicks the application icon or the contact. It may be envisaged that one touch trajectory of a user may match multiple applications, multiple contacts, multiple folders, multiple web searches, and so on.

A preset information database for storing operating object-associated information is provided in the device of this embodiment. The operating object-associated information of the operating object appearing on the terminal during the use of the terminal by the user may be stored in the preset information database. In order to facilitate the matching between the patterns and the operating object-associated information by the matching module 43, correspondence relationship between the corresponding pattern and operating object-associated information may be preset in the preset information database. When the second acquiring module 42 obtains a pattern after matching, the matching module 43 may match the corresponding operating object-associated information in the preset information database according to the shape of the pattern. Considering that a complicated pattern has higher requirements on the drawing time and drawing capability of the user, and will increase difficulties in matching the pattern by the matching module 43, some simple patterns, e.g., circle, heart, square, or the like, may be used for setting the correspondence relationship with the operating object-associated information in the preset information database. It may be envisaged that the correspondence relationship between the patterns and the operating object-associated information may be set by the user, or may be set automatically by the terminal but known to the user.

Further, the matching module 43 is configured to: acquire, when the acquired touch trajectory is matched with a pattern, correspondence relationship between patterns and the operating object-associated information prestored in the preset information database, and match patterns corresponding to respective pieces of operating object-associated information in the correspondence relationship with the acquired pattern matching the touch trajectory.

This scheme requires preset correspondence relationship between the patterns and the operating object-associated information, and thus has certain limitations because the correspondence relationship between the patterns and the operating object-associated information needs to be reset when an operating object is newly added.

Considering that many current application icons generally have symbolic patterns, e.g., an icon of "music application" in the system is a musical note, an icon of "mobile phone manager" is a shield, and an icon of "sports service" has a heart shape, and so on, in one embodiment, a matched application icon may be obtained by matching a pattern matching the touch trajectory with the application icons, so as to finally display the application.

In one embodiment, the matching module 43 is configured to: acquire, when the acquired touch trajectory is matched with a pattern, operating object-associated information in the preset information database, match the pattern matching the touch trajectory with an application icon in the operating object-associated information, and determine that the matching is successful if the similarity of the two exceeds a preset first threshold, or the pattern matching the touch trajectory appears in the application icon.

For example, if the touch trajectory input by the user has a heart shape, a contact "Li XX" in the preset information database corresponding to a pattern of a heart shape, and further an application icon (assumed to be an icon of "exercise health") has a heart shape, then the finally matched operating object-associated information includes the contact "Li XX" and the application icon of "exercise health". As a result, the operating objects displayed by the display module 44 include the contact "Li XX" and the application "Exercise Health" (which may display in the form of an application icon).

In one embodiment, the storage module may store correspondence relationship between characters and the operating object-associated information in the preset information database, where the characters used in the correspondence relationship may be characters irrelevant to the operating object-associated information, or may be characters relevant to the operating object-associated information, such as English letters, Chinese characters, pinyin letters of Chinese characters, and the like included in the operating object-associated information. The characters include, but are not limited to, numbers, Chinese characters, letters, and other information.

The matching module 43 may be configured to: acquire, when the acquired touch trajectory is matched with a character, correspondence relationship between a character prestored in the preset information database and the operating object-associated information, and match characters corresponding to respective pieces of operating object-associated information in the correspondence relationship with the acquired character matching the touch trajectory. When the character matching the touch trajectory appears in the operating object-associated information, the matching may be considered to be successful. For example, the user inputs the character " 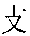 ("pay")", and in the preset information database, the application Ali-pay is set to correspond to the characters " 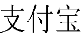 (Ali-pay)". Therefore, the character matching the touch trajectory is present in the operating object-associated information, and the matching is successful.

As can be known from the above description, most of the operating object-associated information in the preset information database is text information, which means that most of the operating object-associated information can be matched by directly using characters.

In one embodiment, the matching module 43 may be configured to: directly match the acquired character matching the touch trajectory with each piece of operating object-associated information in the preset information database when the acquired touch trajectory is matched with a character. In this scheme, the correspondence relationship between the operating object-associated information and the patterns or characters does not need to be preset in a preset information database, thereby convenient to use.

For directly matching the acquired character matching the touch trajectory with each piece of operating object-associated information, the matching module 43 may match the acquired character matching the touch trajectory with Chinese characters or English letters in the operating object-associated information, or with pinyin of the Chinese characters (such as initial consonants of the pinyin) and the like. For example, if the user inputs the character "W", "W" is directly matched with each piece of operating object-associated information, and if the pinyin of a Chinese character, e.g. "Weixin (WeChat)", in the operating object-associated information includes "W", the operating object-associated information "WeChat" is considered to be successfully matched. The matching module 43 may implement direct matching of the acquired character matching the touch trajectory with each piece of operating object-associated information in a traversal manner. In addition, the matching module 43 may match the character with application icons in the operating object-associated information, and determine that the matching is successful when there is a character (or pattern) in an application icon having a similarity exceeding a preset threshold of the character. If the user inputs the character "e", and an application icon of "Eleme" exists in the preset information database (corresponding to the application "Eleme") and has a graph similar to the character "e", it is determined that the icon of "Eleme" is the operating object-associated information matching the character "e".

Further, it may be envisaged that new operating objects may occur due to new applications, new web search keywords, and the like during the use of the terminal by the user, and in order to make the matching module 43 match as much operating object-associated information as possible, the real-time performance of the operating object-associated information in the preset information database needs to be maintained. Therefore, the convenient operating terminal in this embodiment may further include an updating module 45 configured to judge whether the newly appeared operating object-associated information is stored in the preset information database during the use of the terminal by the user; and update the preset information database with the newly appeared operating object-associated information when the determining result is negative. The updating process includes, but is not limited to, writing the new operating object-associated information into the preset information database.

If a correspondence relationship between the operating object-associated information and the characters or patterns is set in the preset information database, after the operating object-associated information is newly added, a corresponding pattern or character to the newly added operating object-associated information may be set by the updating module 45. In one embodiment, the correspondence relationship between the operating object-associated information and the characters or patterns may also be stored in a storage space other than the preset information database.

When the matching module 43 matches the acquired pattern or character with the operating object-associated information in the preset information database, the matching is generally performed from the first piece to the last piece of operating object-associated information in the preset information database. Therefore, an order of arrangement of the operating object-associated information in the preset information database has some influence on the time required for completing the matching. The operating object-associated information of an operating object which is frequently used by the user is ranked at the top to facilitate quick matching. In one embodiment, the convenient operating terminal further includes a statistics module 46 and an arrangement module 47. The statistics module 46 is configured to count usage habits of the user regarding an operating object corresponding to the operating object-associated information, the usage habits including at least one of a group consisting of usage time, number of uses, and usage frequency; and the arrangement module 47 is configured to determine a usage possibility of the operating object by the user according to the using habits, and sequence the operating object-associated information in the preset information database according to the usage possibility. Generally, if the user uses an operating object for a longer time, with a higher frequency of use and with a larger number of uses, this means that the user has a higher possibility of using the operating object, and the operating object-associated information of the operating object is ranked at the top in the preset information database.

In practical use of the convenient operating terminal of this embodiment, if a user inputs a touch trajectory on a standby interface or a display interface of some applications, a false touch of an icon on the standby interface or a false touch of content on the display interface of the applications may possibly occur. If a touch trajectory is input on the interface of the APP "Baidu", a link on the display interface of the APP "Baidu" is likely to be triggered, resulting in a false touch. In order to avoid such false touches, in one embodiment, an operation interface may be specifically displayed before the user inputs the touch trajectory, so as to avoid false touches.

Further, a shortcut button including a first sub-button is arranged on an operation interface of the convenient operating terminal of this embodiment. As shown in Fig. 4, the convenient operating terminal may further include: a calling module 48 configured to call a preset operation interface when the user triggers the first sub-button. Accordingly, the first acquiring module 41 is configured to acquire a touch trajectory input by the user on the preset operation interface; and the display module 44 is configured to display the operating object corresponding to the operating object-associated information successfully matched on the preset operation interface. The shortcut button includes, but is not limited to, a floatable button. The shortcut button may be suspended on any operation interface, such as a standby interface or an application operation interface.

In order to reduce false touches, in one embodiment, the first acquiring module 41 is configured to further acquire a pressure value of the touch trajectory on the touch screen while acquiring the touch trajectory inputted by the user on the touch screen; and the second acquiring module 42 is configured to acquire from the preset first database the pattern or character matching the touch trajectory only when the pressure value satisfies a preset pressure condition; otherwise, not acquire from the preset first database the pattern or character matching the touch trajectory. The preset pressure condition may be that the pressure value of the touch trajectory on the touch screen exceeds a preset pressure threshold.

In practice, while inputting a touch trajectory, the user may find that the input touch trajectory may be wrong. At this time, the input operation of many users becomes hesitant, and contact time between a finger of the user and the touch screen becomes longer. Therefore, duration for the user to input the touch trajectory may also be used as a basis for judging whether the input by the user is wrong. In one embodiment, the second acquiring module 42 may be configured to: not perform the operation of acquiring from the preset first database the pattern or character matching the touch trajectory when the duration of the user inputting the touch trajectory exceeds a preset duration while the first acquiring module 41 acquires the touch trajectory input on the touch screen by the user.

At present, some terminals may be provided with a function of setting a quick start mode for some APPs, which includes starting the corresponding APP by inputting a preset touch trajectory, which undoubtedly may cause certain influence on the method of this embodiment. In order to avoid such influence, the convenient operating terminal of this embodiment may further includes: a collecting module 49 configured to collect operation habits of the user on the terminal during use of the terminal, the operation habits including, when a touch trajectory is input, a shape of the touch trajectory and a corresponding operation purpose; and a pre-determining module 410 configured to pre-determine the corresponding operation purpose of the touch trajectory according to the shape of the touch trajectory and the user habits after the first acquiring module 41 acquires the touch trajectory input on the touch screen by the user. Accordingly, the second acquiring module 42 is further configured to: perform the operation of acquiring from the preset first database the pattern or character matching the touch trajectory only when the pre-determined corresponding operation purpose is to display the operating object corresponding to the operating object-associated information successfully matched; otherwise, stop acquiring from the preset first database the pattern or character matching the touch trajectory.

In practice, when the user inputs the touch trajectory, the input touch trajectory may have an error, and in order to eliminate such errors, the embodiment may further include a first cancel module configured to: cancel a previous touch trajectory input by the user under the condition that a preset cancel gesture input by the user on the touch screen is further acquired after the first acquiring module 41 acquires the touch trajectory input on the touch screen by the user, and control the second acquiring module 42 to stop acquiring from the preset first database the pattern or character matching the touch trajectory.

In order to cancel the erroneous trajectory input by the user, in one embodiment, a shortcut button including a second sub-button is arranged on an operation interface of the convenient operating terminal; and the convenient operating terminal further includes a second cancel module configured to: cancel a previous touch trajectory input by the user under the condition that the user triggers the second sub-button after the first acquiring module 41 acquires the touch trajectory input on the touch screen by the user, and control the second acquiring module 42 to stop acquiring from the preset first database the pattern or character matching the touch trajectory.

By adopting the convenient operating terminal of the embodiment, for the user, the operation involves only one step, i.e., inputting a touch trajectory, then the device can display a plurality of operating objects which are possibly required by the user currently, which reduces the steps of searching for the operating objects by the user, improves the operating efficiency of the user, saves time for the user and improves the user experience.

Obviously, a person skilled in the art would understand that the above modules and steps of the present disclosure can be realized by using a universal computing device, can be integrated in a single computing device or distributed on a network that consists of a plurality of computing devices,; and alternatively, they can be realized by using the executable program code of the computing device, so that they can be stored in a storage device (such as a ROM/RAM, a disk, or an optical disc) and executed by the computing device, in some cases, can perform the shown or described steps in a sequence other than herein, or they are made into various integrated circuit modules respectively, or a plurality of modules or steps thereof are made into a single integrated circuit module, thus to be realized. In this way, the present disclosure is not restricted to any particular hardware and software combination.

The above are further detailed explanation of the present disclosure in conjunction with specific embodiments, and the present disclosure is not to be construed as being limited to these embodiments. It will be apparent to those ordinary skilled in the art to which the present disclosure pertains that several simple deductions or substitutions can be made without departing from the concept of the disclosure, which deductions and substitutions should also be considered as falling within the scope of the disclosure. Furthermore, the individual method steps/modules in the above embodiments may be combined with each other without conflict, and such combinations should also be considered as falling within the scope of protection of the present disclosure.

## Claims

1. A convenient operating method, comprising steps of:
acquiring a touch trajectory inputted by a user on a touch screen;
acquiring from a preset first database a pattern or character matching the touch trajectory;
matching the acquired pattern or character with operating object-associated information in a preset information database, the operating object-associated information being relevant information of a corresponding operating object; and
displaying, under the condition of successful matching, the operating object corresponding to the operating object-associated information successfully matched.

2. The convenient operating method according to claim 1, wherein
when the touch trajectory is matched with a pattern, the step of matching the acquired pattern or character with the operating object-associated information in the preset information database comprises:
acquiring a correspondence relationship between patterns and the operating object-associated information prestored in the preset information database, and matching patterns corresponding to respective pieces of operating object-associated information in the correspondence relationship with the acquired pattern matching the touch trajectory; and
when the touch trajectory is matched with a character, the step of matching the acquired pattern or character with the operating object-associated information in the preset information database comprises:
acquiring a correspondence relationship between characters and the operating object-associated information prestored in the preset information database, and matching characters corresponding to respective pieces of operating object-associated information in the correspondence relationship with the acquired character.

3. The convenient operating method according to claim 1, wherein
when the touch trajectory is matched with a pattern, the step of matching the acquired pattern or character with the operating object-associated information in the preset information database comprises:
acquiring a correspondence relationship between patterns and the operating object-associated information prestored in the preset information database, and matching patterns corresponding to respective pieces of operating object-associated information in the correspondence relationship with the acquired pattern matching the touch trajectory; and
when the touch trajectory is matched with a character, the step of matching the acquired pattern or character with the operating object-associated information in the preset information database comprises:
directly matching the acquired character matching the touch trajectory with the operating object-associated information in the preset information database.

4. The convenient operating method according to claim 1, wherein the operating object-associated information in the preset information database includes at least one of a group consisting of a file name, an application name, a contact, a web page search keyword, and an application icon.

5. The convenient operating method according to any one of claims 1 to 4, wherein the method is applied to a terminal and further includes:
judging whether newly appeared operating object-associated information is stored in the preset information database during the use of the terminal by the user; and
updating the preset information database with the newly appeared operating object-associated information when it is determined that the newly appeared operating object-associated information is not stored in the preset information database.

6. The convenient operating method according to any one of claims 1 to 4, further comprising:
counting usage habits of the user regarding an operating object corresponding to the operating object-associated information, the usage habits including at least one of a group consisting of usage time, number of uses, and usage frequency; and
determining a usage possibility of the operating object by the user according to the usage habits, and sequencing the operating object-associated information in the preset information database according to the usage possibility.

7. The convenient operating method according to any one of claims 1 to 4, wherein
a shortcut button including a first sub-button is arranged on an operation interface of the terminal;
before the step of acquiring the touch trajectory inputted by the user on the touch screen, the method further comprises:
calling a preset operation interface when the user triggers the first sub-button;
the step of acquiring the touch trajectory inputted by the user on the touch screen comprises:
acquiring a touch trajectory input by the user on the preset operation interface; and
the step of displaying the operating object corresponding to the operating object-associated information successfully matched comprises:
displaying the operating object corresponding to the operating object-associated information successfully matched on the preset operation interface.

8. The convenient operating method according to any one of claims 1 to 4, wherein while acquiring the touch trajectory inputted by the user on the touch screen, the method further comprises performing either of the operations of:
acquiring a pressure value of the touch trajectory on the touch screen, and performing the step of acquiring from the preset first database the pattern or character matching the touch trajectory only when the pressure value satisfies a preset pressure condition; otherwise, not performing the step of acquiring from the preset first database the pattern or character matching the touch trajectory; and
acquiring duration of the user inputting the touch trajectory on the touch screen, and not performing the step of acquiring from the preset first database the pattern or character matching the touch trajectory when the duration of the user inputting the touch trajectory exceeds a preset duration.

9. The convenient operating method according to any one of claims 1 to 4, further comprising:
collecting operation habits of the user on the terminal during the use of the terminal, the operation habits including, when a touch trajectory is input, a shape of the touch trajectory and a corresponding operation purpose; and
after the step of acquiring the touch trajectory inputted by the user on the touch screen, the method further comprises:
pre-determining the corresponding operation purpose of the touch trajectory according to the shape of the touch trajectory and the operation habits, and performing the step of acquiring from the preset first database the pattern or character matching the touch trajectory only when the pre-determined operation purpose is to display the operating object corresponding to the operating object-associated information successfully matched.

10. The convenient operating method according to any one of claims 1 to 4, wherein
after the step of acquiring the touch trajectory inputted by the user on the touch screen, the method further comprises at least one of:
canceling a previous touch trajectory input by the user under the condition that a preset cancel gesture input by the user on the touch screen is further acquired, and stopping the step of acquiring from the preset first database the pattern or character matching the touch trajectory; and
canceling a previous touch trajectory input by the user under the condition that the user triggers a second sub-button, and stopping the step of acquiring from the preset first database the pattern or character matching the touch trajectory, wherein the second sub-button is included in a shortcut button arranged on an operation interface of a terminal.

11. A convenient operating terminal, comprising:
a first acquiring module configured to acquire a touch trajectory inputted by a user on a touch screen;
a second acquiring module configured to acquire from a preset first database a pattern or character matching the touch trajectory;
a matching module configured to match the acquired pattern or character with operating object-associated information in a preset information database, the operating object-associated information being relevant information of a corresponding operating object; and
a display module configured to display the operating object corresponding to the operating object-associated information successfully matched under the condition that the matching module matches successfully.

12. The convenient operating terminal according to claim 11, wherein the matching module is configured to:
acquire, when the touch trajectory is matched with a pattern, a correspondence relationship between patterns and the operating object-associated information prestored in the preset information database, and match patterns corresponding to respective pieces of operating object-associated information in the correspondence relationship with the acquired pattern matching the touch trajectory; and
acquire, when the touch trajectory is matched with a character, a correspondence relationship between characters and the operating object-associated information prestored in the preset information database, and match characters corresponding to respective pieces of operating object-associated information in the correspondence relationship with the acquired character matching the touch trajectory, or directly match, when the touch trajectory is matched with a character, the acquired character matching the touch trajectory with the operating object-associated information in the preset information database.

13. The convenient operating terminal according to claim 11, wherein the operating object-associated information in the preset information database includes at least one of a group consisting of a file name, an application name, a contact, a web page search keyword, and an application icon.

14. The convenient operating terminal according to any one of claims 11 to 13, further comprising at least one of:
an updating module configured to judge whether newly appeared operating object-associated information is stored in the preset information database while a user uses the convenient operating terminal, and update the preset information database with the newly appeared operating object-associated information when it is determined that the newly appeared operating object-associated information is not stored in the preset information database;
a statistics module and an arrangement module, wherein the statistics module is configured to count usage habits of the user regarding an operating object corresponding to the operating object-associated information; and the arrangement module is configured to determine a usage possibility of the operating object by the user according to the usage habits, and sequence the operating object-associated information in the preset information database according to the usage possibility, wherein the usage habits include at least one of a group consisting of usage time, number of uses, and usage frequency;
a first cancel module configured to cancel a previous touch trajectory input by the user under the condition that a preset cancel gesture input by the user on the touch screen is further acquired after the first acquiring module acquires the touch trajectory input on the touch screen by the user, and control the second acquiring module to stop acquiring from the preset first database the pattern or character matching the touch trajectory;
a second cancel module configured to cancel a previous touch trajectory input by the user under the condition that the user triggers a second sub-button after the first acquiring module acquires the touch trajectory input on the touch screen by the user, and control the second acquiring module to stop acquiring from the preset first database the pattern or character matching the touch trajectory.

15. The convenient operating terminal according to any one of claims 11 to 13, wherein
a shortcut button including a first sub-button is arranged on an operation interface of the convenient operating terminal;
the convenient operating terminal further includes a calling module configured to call a preset operation interface when the user triggers the first sub-button;
the first acquiring module is configured to acquire a touch trajectory input by the user on the preset operation interface; and
the display module is configured to display the operating object corresponding to the operating object-associated information successfully matched on the preset operation interface.

16. The convenient operating terminal according to any one of claims 11 to 13, wherein
the first acquiring module is configured to further acquire a pressure value of the touch trajectory on the touch screen while acquiring the touch trajectory inputted by the user on the touch screen; and
the second acquiring module is configured to acquire from the preset first database the pattern or character matching the touch trajectory only when the pressure value satisfies a preset pressure condition; otherwise, not acquire from the preset first database the pattern or character matching the touch trajectory.

17. The convenient operating terminal according to any one of claims 11 to 13, wherein
the second acquiring module is configured to not perform the operation of acquiring from the preset first database the pattern or character matching the touch trajectory when the duration of the user inputting the touch trajectory exceeds a preset duration while the first acquiring module acquires the touch trajectory input on the touch screen by the user.

18. The convenient operating terminal according to any one of claims 11 to 13, further including:
a collecting module configured to collect operation habits of the user on the terminal during the use of the terminal, the operation habits including, when a touch trajectory is input, a shape of the touch trajectory and a corresponding operation purpose;
a pre-determining module configured to pre-determine the corresponding operation purpose of the touch trajectory according to the shape of the touch trajectory and the user habits after the first acquiring module acquires the touch trajectory input on the touch screen by the user, and
the second acquiring module is further configured to: perform the operation of acquiring from the preset first database the pattern or character matching the touch trajectory only when the pre-determined corresponding operation purpose is to display the operating object corresponding to the operating object-associated information successfully matched.

19. A storage medium having one or more program stored thereon, wherein when the program is executed by a processor, the processor implements the convenient operating method according to any one of claims 1 to 10.
